(19) Europäisches Patentamt
European Patent Office
Office européen des brevets

(11) EP 4 378 568 A1

(12) EUROPEAN PATENT APPLICATION

(43) Date of publication:
**05.06.2024 Bulletin 2024/23**

(21) Application number: **22306757.0**

(22) Date of filing: **29.11.2022**

(51) International Patent Classification (IPC):
***B01D 61/14*** *(2006.01)* ***B01D 67/00*** *(2006.01)*
***B01D 71/64*** *(2006.01)*

(52) Cooperative Patent Classification (CPC):
**B01D 67/0011; B01D 61/147; B01D 67/00113; B01D 67/0016; B01D 67/00165; B01D 67/0083; B01D 71/64**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Centre National de la Recherche Scientifique 75016 Paris (FR)**
- **Université de Montpellier 34090 Montpellier (FR)**
- **Ecole Nationale Supérieure de Chimie de Montpellier 34090 Montpellier (FR)**
- **COMMISSARIAT À L'ÉNERGIE ATOMIQUE ET AUX ÉNERGIES ALTERNATIVES 75015 Paris (FR)**
- **TOTALENERGIES ONETECH 92400 Courbevoie (FR)**

(72) Inventors:
- **BOUYER, Denis 34160 CASTRIES (FR)**
- **DERATANI, André 34095 MONTPELLIER Cedex 5 (FR)**
- **QUEMENER, Damien 34830 JACOU (FR)**
- **CAO, Edgar 75020 PARIS (FR)**
- **KAMMAKAKAM, Irshad 679028 KERALA (IN)**
- **GUENOUN, Patrick 91191 GIF Cedex (FR)**
- **GARATE, Hernan 91191 GIF Cedex (FR)**
- **MERICQ, Jean-Pierre 34000 MONTPELLIER (FR)**
- **FAUR, Catherine 34980 SAINT GELY DU FESC (FR)**
- **JACOB, Matthieu 64170 CESCAU (FR)**
- **LORAIN, Olivier 31320 CASTANET-TOLOSAN (FR)**

(74) Representative: **Novagraaf Technologies Bâtiment O2 2, rue Sarah Bernhardt CS90017 92665 Asnières-sur-Seine Cedex (FR)**

# (54) POROUS POLYIMIDE POLYMER MEMBRANE WITH TENSILE STRENGTH

(57) Process for the preparation of a porous polyimide membrane comprising the following steps:
i- from a starting polymer material comprising at least one of the following polyamic acid, PAA, selected among an electronically neutral polyamic acid, enPAA, and a negatively charged polyamic acid, NPAA, comprising cations to maintain electroneutrality, carrying out an acid-base reaction in water to obtain a highly negatively charged polyamic acid, HNPAA, comprising cations to maintain electroneutrality having a molar ratio of [total amounts of cationic charges] / [total amount of carboxylic functions of the PAA] from 0.90 to 1 ;
ii- performing a reaction involving a phase inversion technique ; and
iii- carrying out an imidization reaction on the HNPAA to obtain the porous polyimide membrane.

EP 4 378 568 A1

FIG. 1

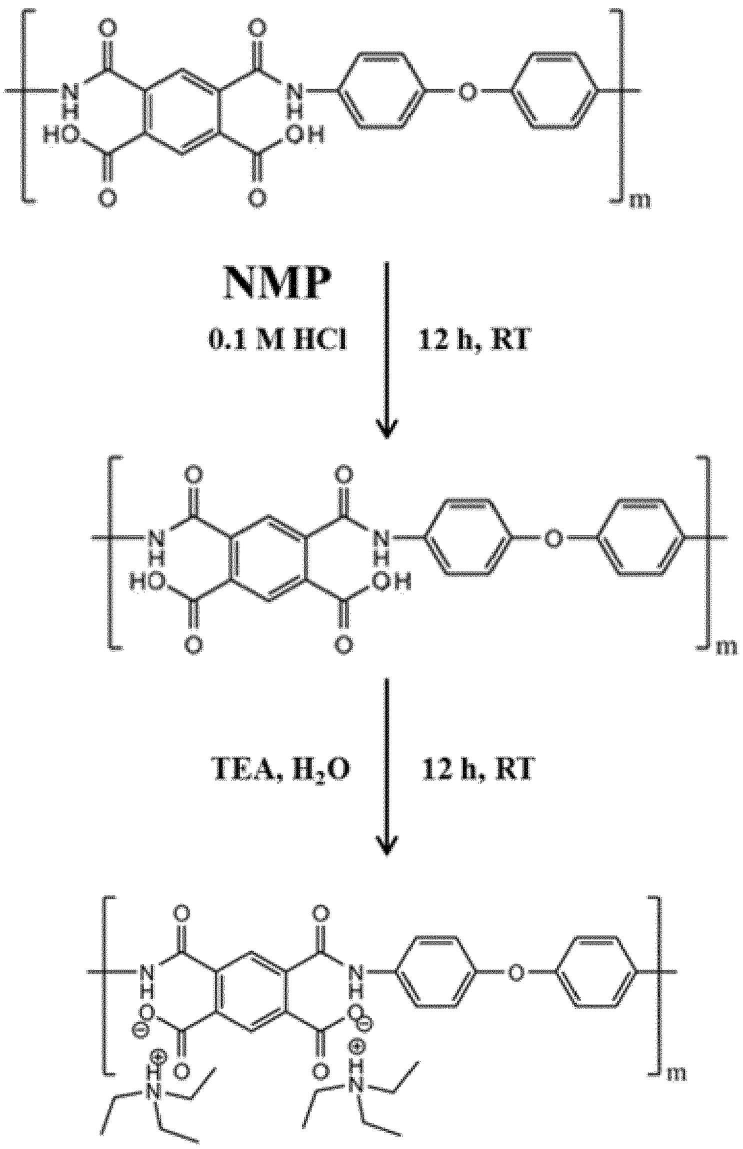


Kapton® PAA

(VII)

Kapton® PAAS (IX)

**Description**

FIELD OF THE INVENTION

The present invention relates to polyimide precursors for the preparation of high flux asymmetric porous polyimide membranes. The invention relates also to process for the preparation of these membranes via an aqueous route.

In what follows, the numbers between brackets ([]) refer to the list of references provided at the end of the description.

BACKGROUND OF THE INVENTION

Membrane-based separation technologies are potentially more energy-efficient and extensively used as promising separation tool in many engineering applications including wastewater treatment, brackish water or seawater desalination, and offshore oil/water purification **[1-5]**. Membranes of polymeric materials have gained a great deal of attention in water treatments because they are flexible and easy to scale up, and compete successfully with conventional water treatment methods, such as coagulation **[6,7]**, flocculation **[8,9]** and biological treatment **[10,11]**. Further polymer materials are mechanically stable, offer good separation capabilities, and can be fabricated in a range of configurations, such as hollow fibers or flat sheet membranes. The key parameters that characterize membrane separation performance are the porosity dimensions and rejection coefficient, and hence, a tradeoff between permeability and selectivity has always existed (so-called Robeson's Upper-Bound for gas separation) **[12-14]**. In view of that, developing of porous membranes that are both highly permeable and selective is the main challenge in separation and purification field.

Polyimides (PIs) have been widely used as separation polymeric membranes because they display moderate to separation properties and excellent thermal and mechanical properties, making them suitable as hollow fiber membranes in the context of industrial applications. To achieve a good separation performance, porous polyimide membranes are often made by a phase-inversion process, in which lowering the solvency of solvent from polymer/solvent dope solution and precipitating polymer membrane with asymmetric pores **[15-17]**. However, most of the glassy polymers such as PIs suffer from solubility issues to perform phase inversion process, particularly for Non-solvent Induced Phase Separation (NIPS) process. Several approaches have therefore attempted to change the physical and chemical formations of the PIs, with the goal of achieving well-defined porous polyimide membranes simultaneously possessing excellent properties of PIs. Typically, polyamic acid (PAA) segment is extensively used as a precursor material to prepare PI porous membrane via phase separation method followed by a curing process to obtain PI structure. As first recognized by Echigo and co-workers **[18]**, the poly(4,4'-oxydiphenylenepyromellitimide), also known as Kapton®, can be prepared as porous membrane using the dry phase inversion method and curing process with the PAA solution of pyromellitic dianhydride (PMDA) and 4,4-oxidianiline (ODA). Later, Wang and co-workers reported the fabrication of ordered porous PI thin films from in situ self-assembled silica microsphere and PAA mixture followed by thermal curing processes **[19]**. More recently, Kim and co-workers developed a new sponge-type polyimide membrane fabrication from PAA solution of PMDA-ODA via NIPS technique and high temperature curing processes, in which pore size also was controlled by varying solvent type and height of the solvent based on Jurin's law **[20]**.

On the other hand, it has been considered that phase-inversion process consumes large amounts of non-solvents such as ultrapure water or an aqueous solution as coagulation and washing baths to remove polar organic solvents. Also, the use of dipolar aprotic solvents such as N,N-dimethylformamide (DMF), N,N-dimethylacetamide (DMAc) and N-methylpyrolidinone (NMP) in industrial fabrication units is limited because of solvent toxicity as well as significant cost input. Therefore, it is highly desirable to replace the conventional polar organic solvents with more efficient and environmentally friendly non-pollutant solvents. In that regard, we recently developed a new type of aqueous-media fabrication in which water-soluble polymer structures such as poly (vinyl alcohol) and bio-based hydroxypropylcellulose were introduced as greener contemporaries, avoiding the use of polar organic solvents in fabrication technology **[21,22]**. Membranes prepared from these newly developed materials displayed exceptional compatibility and moderate water flux, together with excellent mechanical stabilities.

In this current work, we combine the benefits of rigid aromatic polyimide by means of polyamic acid containing ammonium salt (PAAS) with the environmentally friendly aqueous route fabrication pathway. PAAS having ammonium salt counter-ions can be prepared by neutralizing the carboxylic acid groups of PAA backbone with ammonium components, gaining a polyelectrolyte structure with excellent solubility in water **[23].** Ding and co-workers **[24]** investigated that the salt counter-ions can also lower the further imidization temperature of precursor material to yield PI structure without sacrificing its processability.

There remains a need for the development of new synthetic processes which allow the preparation of polyimide membranes exhibiting enhanced properties regarding thermal and mechanical stabilities and, extremely high water flux, and with properties that outperform those of all the reported polyimide membranes so far in this respect.

BRIEF DESCRIPTION OF THE INVENTION

The present invention relates to a process for the preparation of a porous polyimide membrane comprising the following steps:

i- from a starting polymer material comprising at least one of the following polyamic acid (PAA) selected among an electronically neutral polyamic acid (enPAA) and a negatively charged polyamic acid (NPAA) comprising cations to maintain electroneutrality, carrying out an acid-base reaction in water to obtain a highly negatively charged polyamic acid (HNPAA) comprising cations to maintain electroneutrality having a molar ratio of [total amounts of cationic charges] / [total amount of carboxylic functions of the PAA] from 0.90 to 1 ;
ii- performing a reaction involving a phase inversion technique (PIT) ; and
iii- carrying out an imidization reaction on the HNPAA to obtain the porous polyimide membrane.

The present invention describes an aqueous route for the preparation of a porous and asymmetric polyimide membrane polyimide membrane. In the context of the present invention the preparation of the membranes has been redesigned to use water as the main production solvent. Thus, a water-soluble polymer precursor of the targeted final material, was used and implemented thanks to the establishment of a new procedure procedure allowing a phase separation (preparation of a porous material) while remaining in an aqueous medium. Advantageously, the obtained polymer is a water soluble polymer that can be heat treated to be converted into a stable, porous and totally water insoluble material.

The inventors have unexpectedly shown that such a process allows the preparation of porous materials with excellent thermal resistance (up to 340°C), good mechanical properties and high water permeability (450 $L.h.m.bar^{-1}$).

Advantageously, the acid-base reaction performed in step i- of the process according to the present invention consists of creating carboxylate functions on the polymeric starting material, preferably involving an amine, more preferably the amine is a trialkylamine, and most preferably the amine is the triethylamine. Triethylamine (TEA) is a hindered base which can stay exchanged by other smaller cations before the imidization step. Preferably, the TEA is added so that an equimolar ratio of TEA : carboxylic functions of the PAA is obtained.

Advantageously, step i- of the process comprises the following sub-steps:

i-a) solubilizing the highly negatively charged polyamic acid (HNPAA) in water according to the mass ratio HNPAA / water of 10 to 30 : 90 to 70 ; and
i-b) adding an aqueous saline solution, preferably containing an alkaline salt, and more preferably the aqueous saline solution is a 0.5 to 1.5 M ($mol.L^{-1}$) of a NaCl solution ; to obtain a homogeneous solution of HNPAA.

More advantageously, in step i- after performing the sub-step i-b), an additional sub-step i-c) consisting in casting the homogeneous solution of HNPAA on a flat support is performed. Preferably a prior sonication is applied for at least 1 h to remove air bubbles, and the casting operation is done by spreading the mixture above 50°C on a glass plate with a thin blade. Bleaching is obtained in 30-60 seconds at this temperature.

Advantageously, in step ii) the phase inversion technique is realized by immersing the HNPAA in a coagulation bath to obtain a solid material with porosity. Immersing the membrane in a coagulation bath allows the porous structure of the membrane to be permanently stabilized before imidization.

Advantageously, during step ii) the homogeneous solution obtained during step i-b) is heated at 50 - 70°C during 10 - 60 mn, the temperature is lowered at 20 - 40°C during 1 - 30 mn.

Advantageously, the coagulation bath contains at least a polyvalent cation, preferably a divalent cation, more preferably calcium. Hence, the porosity of the material can be maintained while the temperature is returned to room temperature. The addition of such a type of cation, is advantageous to avoid as much as possible the polymer become soluble again and the porous structure of the material to be lost.

Advantageously, the enPAA or the NPAA is an aromatic enPAA or an aromatic NPAA.

Advantageously, the process according to the present invention comprise the following steps:

a)- immersing a polyamic acid PAA, or a PAA salt, in water and adding an amount of tertiary amine in order to reach the equimolar ratio between the carboxylic acid function and tertiary amine function ;
b)- applying a vigorous stirring to the mixture obtained at step a) until complete dissolution to obtain a homogeneous solution ;
c)- filtering and freeze-drying the solution obtained in b) to obtain a PAA salt;
d)- dissolving the PAA salt obtained in c) in water and heating, preferably under stirring above 40°C during at least half an hour;
e)- adding a 1M solution of NaCl and stirring above 60°C until the obtention of an homogeneous material;

f)- sonicating the material obtained in step e) and spreading the material on a substrate ;
g)- immersing the substrate with the material in a 1M solution of $CaCl_2$ in order to obtain a membrane on the substrate ;
h)- washing the membrane with a water and/or a water/glycerol solution;
i)- immersing the membrane in a glycerol solution and leave it at 90 to 150°C, preferably for at least 1 h ; and
j)- vacuum drying the membrane at 90 to 150°C for more than 1 h, and at room temperature during one night.

Most preferably, in step f-) the material is spread at 60°C, and the substrate with the said material is allowed to cool at 25°C during a time between half an hour and one hour.

The present invention relates also to a porous polyimide membrane, wherein the total porosity of the membrane is greater than 50 % measured by a dry-wet method and with the equation:

$$\varepsilon\ (\%) = \frac{W_w - W_d}{\rho_w \times A \times \delta}$$

where 'ε' is the porosity of membrane, $W_w$ is the weight of wet membrane (g), $W_d$ is the weight of dry membrane (g), and $\rho_w$ is pure water density (0.998 g/cm$^3$) at room temperature; A and δ are the area and thickness of the membrane in wet state ; and one of the membrane surfaces exhibits a porosity greater than 80% preferably greater than 90%, the surface porosity being calculated by computer image analysis (ImageJ) from SEM images.

The dry wet method is performed according to the method described in [25].

For the ImageJ analysis, the SEM images were converted to 8-bit binary (black and white) images, in which the black areas represent the pores and white areas represent the solid surface. Therefore, a clear cut-off between pores and surface was obtained. The binary image was then analyzed using the "analyse particles" tool built in ImageJ (see **[26]**).

Advantageously, the membrane shows an asymmetric morphology. Asymmetric membranes are characterized by a thin active layer called skin and a porous support. An asymmetric membrane is anisotropic.

Advantageously, the porous polyimide membrane comprises a polyimide material and is prepared according to the process according to the present invention.

Advantageously, the polyimide material of the membrane is selected among at least a polyetherimide, a polyamide-imide, an imide with polycyclic and ketone groups, and is preferably selected among one of the following polyimide polymers (I) to (V):

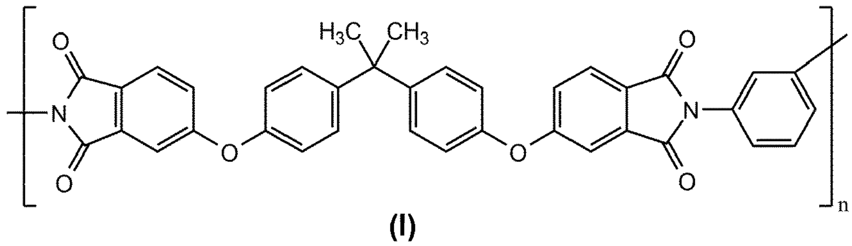

**(I)**

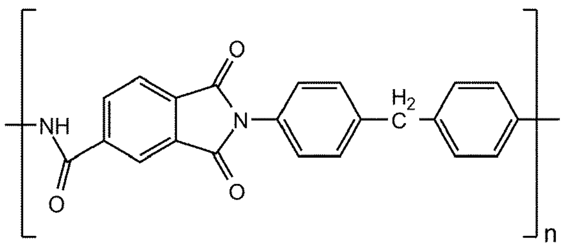

**(II)**

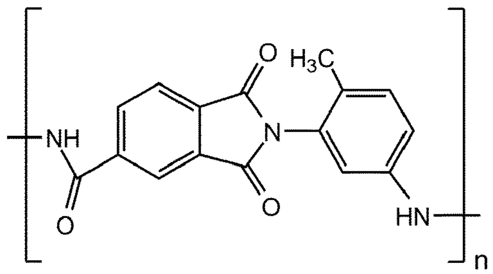

(III)

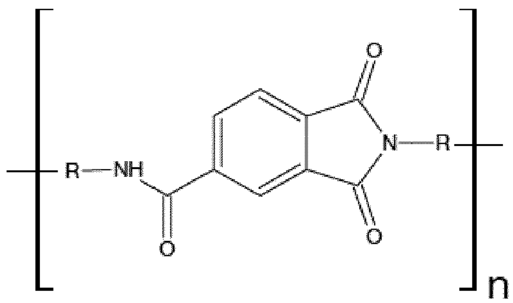

(IV)

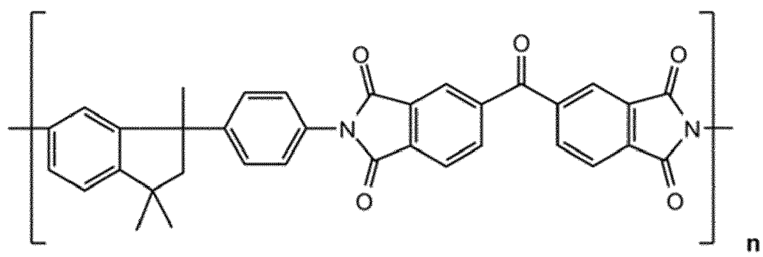

(V)

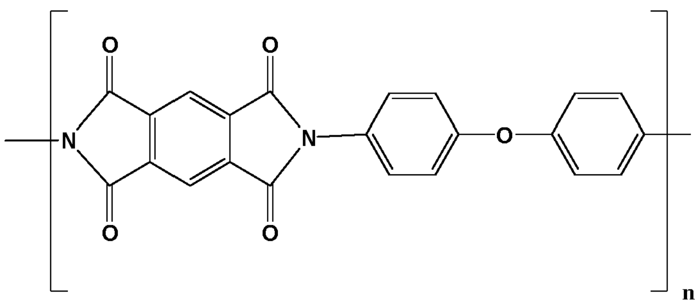

(VI) ;

the index n being selected between 20 and 300;
the R- groups of compound (IV) being selected from aliphatic carbon chains and carbon chains comprising at least one aromatic group.

More advantageously, the polyimide material is a polyetherimide.

Preferably the enPAA, or the NPAA, of the porous polyimide membrane according to the invention, used as starting polymer material in the process is selected in the group comprising at least one of the followings, or one of its salt:

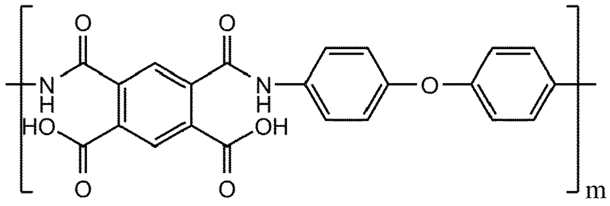

**(VII)**

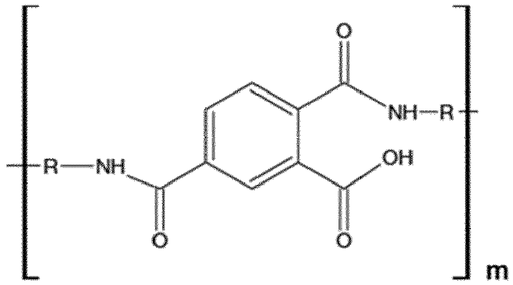

**(VIII)**

the index m being selected between 20 and 300;
and preferably the starting material is (VII).

In addition, the present invention relates to the use of a porous polyimide membrane according to the present invention, for wastewater filtrations, preferably for the treatment of waste comprising a water/oil mixture.

## DEFINITIONS

To facilitate an understanding of the present invention, a number of terms and phrases are defined below:
The term "aliphatic", as used herein, includes both saturated and unsaturated, straight chain (i.e., unbranched) or branched aliphatic hydrocarbons, which are optionally substituted with one or more functional groups. As will be appreciated by one of ordinary skill in the art, "aliphatic" is intended herein to include, but is not limited to, alkyl, alkenyl, alkynyl moieties.

As used herein, the term "alkyl", refers to straight and branched alkyl groups. An analogous convention applies to other generic terms such as "alkenyl", "alkynyl" and the like. As used herein, "lower alkyl" is used to indicate those alkyl groups (substituted, unsubstituted, branched or unbranched) having about 1-6 carbon atoms. Illustrative alkyl groups include, but are not limited to, for example, methyl, ethyl, n-propyl, isopropyl, allyl, n-butyl, sec-butyl, isobutyl, tert-butyl, n-pentyl, sec-pentyl, isopentyl, tert-pentyl, n-hexyl, sec-hexyl, moieties and the like, which again, may bear one or more substituents. Alkenyl groups include, but are not limited to, for example, ethenyl, propenyl, butenyl, 1-methyl-2-buten-l-yl, and the like. Representative alkynyl groups include, but are not limited to, ethynyl, 2-propynyl (propargyl), 1-propynyl and the like.

In general, the term "aromatic" or "aryl", as used herein, refers to stable substituted or unsubstituted unsaturated mono- or polycyclic hydrocarbon moieties having preferably 3-14 carbon atoms, comprising at least one ring satisfying Hückle's rule for aromaticity. Examples of aromatic moieties include, but are not limited to, phenyl, indanyl, indenyl, naphthyl, phenanthryl and anthracyl.

As used herein, the term "heteroaryl" refers to unsaturated mono-heterocyclic or polyheterocyclic moieties having preferably 3-14 carbon atoms and at least one ring atom selected from S, O and N, comprising at least one ring satisfying the Hückel rule for aromaticity. The term "heteroaryl" refers to a cyclic unsaturated radical having from about five to about ten ring atoms of which one ring atom is selected from S, O and N; zero, one or two ring atoms are additional heteroatoms independently selected from S, O and N; and the remaining ring atoms are carbon, the radical being joined

to the rest of the molecule via any of the ring atoms, such as, for example, pyridyl, pyrazinyl, pyrimidinyl, pyrrolyl, pyrazolyl, imidazolyl, thiazolyl, oxazolyl, isooxazolyl, thiadiazolyl, oxadiazolyl, thiophenyl, furany1, quinolinyl, isoquinolinyl, and the like. Examples of heteroaryl moieties include, but are not limited to, pyridyl, quinolinyl, dihydroquinolinyl, isoquinolinyl, quinazolinyl, dihydroquinazolyl, and tetrahydroquinazolyl.

As used herein, the expression "$C_x$-$C_y$, preferably $C_{x1}$-$C_{y1}$, alkylaryl, aralkyl or aryl", where x, y, x1 and y1 represent integers denoting the number of carbon atoms in the chemical moiety to which it refers (e.g., "alkylaryl", "aralkyl", "aryl")), means "$C_x$-$C_y$alkylaryl, $C_x$-$C_y$aralkyl or $C_x$-$C_y$aryl, preferably $C_{x1}$-$C_{y1}$alkylaryl, $C_{x1}$-$C_{y1}$ aralkyl or $C_{x1}$-$C_{y1}$aryl". Likewise, the expression "$C_x$-$C_y$ alkylaryl, aralkyl or aryl", means "$C_x$-$C_y$alkylaryl, $C_x$-$C_y$aralkyl or $C_x$-$C_y$aryl".

As used herein, the term "independently" refers to the fact that the substituents, atoms or moieties to which these terms refer, are selected from the list of variables independently from each other (i.e., they may be identical or the same).

One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.

DETAILED DESCRIPTION OF CERTAIN PREFERRED EMBODIMENTS OF THE INVENTION

## Analysis and experimental protocols

*Materials*

Poly(pyromellitic dianhydride-co-4,4'-oxydianiline) in N-Methyl-2-pyrrolidone (NMP) was purchased from Sigma Aldrich® and stored at -20°C to ensure no structural changes with the pre-imidization state such as depolymerization or degradation overtime. Triethylamine (TEA), Sodium Chloride, N-Methyl-2-pyrrolidone (NMP) and Glycerol were obtained from Sigma Aldrich®. Calcium Chloride was purchased from Merck®-France. All other chemicals, unless otherwise noted, were obtained from commercial sources and used as received.

*Characterization*

- $^1$H NMR spectra were obtained on a Bruker 300-Ultrashiled™ (300 MHz) instrument using $D_2O$ as a reference or internal deuterium lock.
- FTIR was achieved with a Nicolet 710 Fourier-transform infrared spectrometer with attenuated total reflection (ATR). The spectra were acquired in the range of wavenumber from 4000 to 650 $cm^{-1}$with 64 scans at a 2 $cm^{-1}$ resolution.
- In the size exclusion chromatography, samples were analyzed using a WYATT® GPC/SEC setup, with a RI detector (Mercury Lamp, A = 633 nm) and a MALS setup. The solvent of choice was water (0.02 % $NaN_3$ and 10 mM NaCl). Additionally, the flow rate was set to 0.5 mg/mL (in order to be certain that the pressure did not exceed 200 Pa). The column of choice was a TSKgel (7.8 mm ID × 30 cm length), with particle sizes of 13 μm and can tolerate up to 500 KDa samples.
- The mechanical properties of the membranes were measured on a Dynamic Mechanical Analyzer System (DMA, 01dB-METRAVIB) using a crosshead of 0.05 N/s ramp rate at 25°C under dry conditions. Engineering stress was calculated from the initial cross sectional area of the sample and Young's modulus (E) was determined from the initial slope of the stress-strain curve. The membrane samples were cut into a rectangular shape with 40 mm × 8 mm, and the thickness was determined with a digital micrometer (MITUTOYO with an accuracy of 0.001 mm). Five specimens from each membrane at different locations were used for the measurements.
- Scanning electron microscopic micrographs were produced using HITACHI® S-4800 equipped with a Sputler™ Coater SC 7620 for sample metallization. All the films were fractured in liquid nitrogen before each analysis
- Scanning Electron Microscopy (SEM). SEM analyses were conducted using a Hitachi S-4500 (Tokyo, Japan) device operating at spatial resolution of 1.50 nm at 15 kV energy. The samples of 1cm × 0,5 cm were dried and coated with an ultrathin layer of electrically conducting platinum deposited by high-vacuum evaporation.

Synthesis of Kapton® **Precursor Poly (amic acid) Salt: compound IX illustrated in figure 1 and 2; from compound VII:**

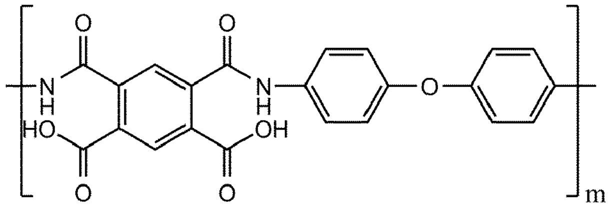

**(VII)**

A two-step procedure such as isolation of poly (amic acid), PAA in solid form followed by triethylamine salt formation was performed for the synthesis of Kapton® precursor Poly (amic acid) Salt, PAAS. In the first step, Poly(pyromellitic dianhydride-co-4,4'-oxydianiline), PAA solution in NMP was diluted with 1:3 ratio of NMP and precipitated into 0.1 M HCl (1:4 ratio of Kapton® precursor/NMP mixture:0.1 M HCl) under rapid stirring. The mixture was allowed to stir overnight to get smaller pieces of solid Kapton® PAA polymer. Then, yellow-colored polymer beads were collected by filtration and washed twice with deionized water, and subsequently frozen/freeze-dried before storage for later use. In the second step, the Kapton® PAA polymer was complexed with triethylamine, TEA, in order to obtain counter-ion salt containing Kapton® PAAS polymer. This was achieved by taking the carefully isolated Kapton® PAA (10 g, 23.8 mmol), and dispersing it in 100 mL of DI water. Under rapid stirring, TEA (7 mL, 50 mmol) was added to provide a 1:1 ratio of TEA :-COOH groups available in the poly(amic acid). The mixture was then left under rapid stirring overnight until fully solubilized. The resulting solution was filtrated, frozen, and freeze-dried to give the Kapton® PAAS as pale yellow polymer beads (9.6 g, 65%); δH(400 MHz, $D_2O$) 8-6.7 (10H, br signal, ArH), 3.3-2.9 (12H, br signal, TEA-$CH_2$), and 1.4-0.9 (18H, br signal, $TEACH_3$); (ATR- FTIR)/cm-1 2925, 1651, 1604, 1500, 1350, 1210, and 820; GPC (H2O, RI) dn/dc: 0.2192, $M_w$= $1.18\times10^5$ g/mol and PDI=1.3.

Phase Separation of Kapton® **PAAS as a function of monovalent Salt**

*Membrane Preparation and Imidization Process*

TEA salt containing Kapton® PAAS polymer (0.2 g, 20wt%) was dissolved in distilled water (0.8 g, 80 wt%) and stirred at 60 °C with 200 rpm for 30 min. Then, 1 M NaCl (0.35 mL) was added to this aqueous solution of Kapton® PAAS and stirred for another 5-10 min. until get a homogenous solution. After preparing the homogeneous solution, the resultant casting mixture was sonicated at ambient temperature for 1 h to remove the air bubbles, and then cast on a smooth horizontal glass plate at 60 °C by film casting knife with a thickness of 400 μm. The material on the glass plate started changing the color from transparent to opaque in 30-60 seconds at 60 °C. After this preliminary phase separation, the material on the glass plate was moved to 1 M $CaCl_2$ coagulation bath for immersion precipitation, and the membrane was gradually peeled off from the glass plate upon the completion of phase separation. Finally, the membrane was immersed in the distilled water for 1 h as a second coagulation bath for removing water-soluble components in the membrane and stored in the 50:50 Glycerol: water mixture prior to performing imidization.

The obtained opaque Kapton® PAA membrane was imidized in pure glycerol at 130 °C for 1 h followed to vacuum drying by placing between two sheets of filter paper at 150 °C for 3 h to give the cyclo-imidized Kapton® PI membrane corresponding to a membrane comprising the polyimide material named herein as compound VI.

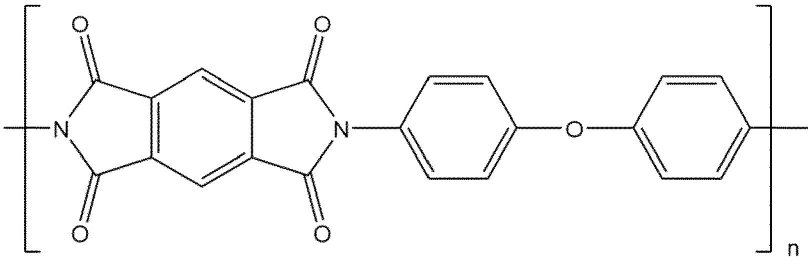

**compound VI**

The resulting high stable Kapton® PI membrane was cooled to room temperature and being dried at the ambient temperature for 24 h before using water filtration tests. The thickness of Kapton® PI membranes was controlled to be <50 μm.

*Porosity Measurements*

The membrane porosity, which is considered as the ratio of the volume of voids to the total volume of membrane, was measured using a dry-wet weight method **[25].** The membrane samples were cut into a rectangular shape with 1 cm × 1 cm, and immersed in distilled water for overnight at room temperature. The extracted membranes were vacuum dried at 50 °C for 24h, and before and after extraction weights were measured to determine the membrane porosity (ε) by the following equation:

Equation 1:

$$\varepsilon\ (\%) = \frac{W_w - W_d}{\rho_w \times A \times \delta}$$

Where 'ε' is the porosity of membrane, $W_w$ is the weight of wet membrane (g), *Wd* is the weight of dry membrane (g), and $\rho_w$ is pure water density (0.998 g/cm3) at room temperature. *A* and $\delta$ are the area and thickness of the membrane in wet state, respectively. The surface porosity was calculated by computer image analysis, with software ImageJ, from SEM images: images produced using a scanning electron microscope.

*Water Flux Measurements*

The water flux experiments were conducted with an ultrafiltration cell (Millipore) based on a dead-end filtration setup. Ultra-pure water was used to characterize the water flux behavior of developed asymmetric Kapton® PI membrane. Before each measurement, all samples were thoroughly vacuum dried at least 1 day to prevent overestimation induced by any residual components trapped in them. All the experiments were performed at ambient temperature (20 °C) over the pressure range between 0 to 3.5 bars with the interval of 0.5 bars during 15 min. The upstream pressure was controlled by a reservoir unit having a large amount of ultra-pure water connected to Millipore ultrafiltration cell. The mass of water versus time transient on the permeate side was monitored with a digital balance and recorded to a desktop computer through a shield data cable. The water flux was determined from the permeate water rise versus time plot according to the following equation:

Equation 2:

$$J_w = \frac{Q}{A \Delta t}$$

Where Jw is the water flux ($L/m^2 \cdot h$), Q is the amount of permeate collected (L), A is the effective area of membrane ($m^2$) and Δt is the sampling time (h). The membrane permeance was determined at seven different pressures ranging between 0 to 3.5 bars with the interval of 0.5 bars according to the following expression:

Equation 3:

$$P = \frac{J_w}{\Delta p}$$

Where, P is the permeance coefficient ($L/m^2 \cdot h \cdot bar$) and Δp is the operating pressure (0 to 3.5 bars).

## Results and discussion

*Synthesis and characterization of the polyimide precursor, Kapton® PAAS*

During the synthesis of Kapton® PAAS the Sigma Aldrich product of PAA in NMP was first isolated in solid form and followed a selective counter-ion salt formation by triethylamine. The solid isolated Kapton® PAA was found to have

a very high molecular weight and a good polydispersity (dn/dc: 0.2192, $M_w$= 1.18×$10^5$ g/mol, PDI=1.3, as confirmed by GPC). The selective counter-ion salt formation of ArCOOH unit of PAA was further conducted in ultrapure water by 2.1 equiv. of triethylamine to obtain the precursor polymer, Kapton® PAAS. As elucidated in Figure 1, the $^1$H NMR spectra of the Kapton® PAAS, compound IX, contain the characteristic peaks of triethylammonium protons $-CH_3$ at 0.93 ppm and $-CH_2$ at 2.43 ppm (a and b respectively), indicating the successful incorporation of the triethylammonium counter-ions. The degree of ammonium functionalization was quantitatively evaluated based on the ratio of the integrals of the aromatic poly(amic acid) protons (c) to the aliphatic triethylamine protons (a and b), and found to be 100% (see figure 1 and figure 2).

The triethylammonium functionalized Kapton® PAA structure was further verified by FT-IR spectrum of Kapton® derivative PAA and final PAAS product (figure 3). Several peaks are of great interest around 1720 $cm^{-1}$ like the peak C=O present in PAA but disappearing in PAAS due to the stabilization thanks to the triethylamine. Another important peak noted at around the C-N bond, at 1350 $cm^{-1}$ appeared in the PAAS sample, comprising compound IX, but not in the PAA precursor, comprising compound VII, revealed the successful incorporation of the triethylammonium counter-ion group **[26]**. To estimate the ratio between $COO^-$ and COOH at pH 5.5, the peak height at 1710-1700 $cm^{-1}$ (carbonyl COOH) and 1565-1542 $cm^{-1}$ ($COO^-$) were compared and the maximum amount of COOH was estimated to be 5% ($COO^-$ 95%)

*Fabrication and characterization of asymmetric Kapton® PI membrane*

The homogeneous precursor solution of Kapton® PAAS (20 wt%) and NaCl monovalent salt (1 M) in water was casted onto a glass plate at 60 °C, allowing 30-60 s, and coagulated in 1 M $CaCl_2$ bath. After being solidified from coagulant solution and water wash, the opaque salt-free Kapton® PAA film was thermally cured to produce Kapton® PI membrane. An anhydrous thermal imidization was performed in glycerol solution at 130°C during 1h, then vacuum dried at 150°C during 3 h and at room temperature (rt) during 24h, yielding high porous yellow colored defect-free Kapton® PI membrane. To confirm the imidization, opaque porous membranes formed from the aqueous solution of Kapton® precursor were characterized by ATR FT-IR before and after thermal curing. As shown in figure 4, the characteristic peaks corresponding to the C=O stretching (at 1651 $cm^{-1}$) and N-H bending (at 1604 $cm^{-1}$) of Kapton® PAA was drastically reduced in Kapton® PI spectrum. At the same time, new peaks corresponding to the C=O symmetric stretching, CN stretching and C=O bending (at 1720, 1325 and 723 $cm^{-1}$, respectively) also appeared in Kapton® PI spectrum, indicating that the thermal curing in the glycerol solution effectively converted PAA to its counterpart PI. Thermal behavior of the obtained Kapton® PI membrane was further investigated by thermogravimetric analysis (TGA) and compared to that of the pristine Kapton® PAA to elucidate the thermal treatment protocol for cyclic imidization (see figure 4). As such, the TGA curves showed that Kapton® PI membrane underwent an admirable degradation at ca. 340-620°C, whereas Kapton® PAA membrane underwent a complete degradation at very low temperature such as 150-260°C, indicating the structural confirmation of cyclic imidization occurred in glycerol/vacuum thermal treatments to produce Kapton® PI. Nonetheless, as can be seen in figure 5, both the samples exhibited a slender initial weight loss at 75°C because of a trivial amount of triethylammonium salts. In contrast, the initial 9% weight loss of Kapton® PI was higher than those of 5% weight loss of Kapton® PAA might be attributed to trapped glycerol in Kapton® PI membrane. Overall, porous Kapton® PI membrane displayed outstanding thermal properties with gradual degradation between 340 and 620 °C, yielding the residual char as high as 60% at 700 °C due to the high stable polyimide backbone structure.

*Mechanical Properties*

The mechanical properties of the Kapton® PI membrane were measured and compared with those of Kapton® PAA precursor membrane (figure 5 and Table 1). As expected, the thermally imidized Kapton® PI membrane, comprising compound VII, exhibited excellent tensile strength up to 49.58 MPa and elongation break as 6% with Young's modulus of 1.2 GPa. Whereas, Kapton® PAA membrane showed moderate tensile strength up to 11.15 MPa and elongation break as high as 11.64% with Young's modulus of 0.2 GPa. These results clearly indicated that the amorphous natured Kapton® PAA membrane has been readily gained good mechanical properties upon thermal imidization, making adequate enough for filtration tests. The mechanical properties of the Kapton® PAA membrane, however, are sufficient for use in industrial applications such as hollow fiber membrane fabrications. Table 1 shows the mechanical properties of Kapton® PI and Kapton® PAA membranes.

Table 1:

| Membrane | Stress at break (Mpa) | Strains at break (%) | Young's Modulus (Gpa) |
|---|---|---|---|
| Kapton® PI (VI) | 49.58 | 6.01 | 1.2 |

(continued)

| Membrane | Stress at break (Mpa) | Strains at break (%) | Young's Modulus (Gpa) |
|---|---|---|---|
| Kapton® PAA (VII) | 11.15 | 11.64 | 0.2 |

*Morphological structure characterization of asymmetric Kapton® PI membrane*

In order to understand the influence of novel aqueous-mediated monovalent salt based phase inversion fabrication as well as subsequent thermal imidization on the membrane structure, cross-sections of the opaque Kapton® precursor membranes before and after thermal curing were observed by SEM analysis. The figures 6a and 6b represent the cross-sectional SEM images of newly developed Kapton® PAA and Kapton® PI membranes. Despite to the aqueous-mediated fabrication both the membranes exhibited asymmetric structure with dense top-layer followed by porous sublayer with fully developed macro-pores, which is the typical morphology of filtration membranes fabricated via NIPS technique. The obtained porous asymmetric structure can be attributed to the interactions between the ammonium counter ions of PAA and the monovalent NaCl salt components in the casting solution. Addition of 1M NaCl solution as an additive into the casting solution caused the formation of complexes between NaCl salt and the ammonium functionalized PAA polymer, resulting in a reduction of the interactions among polymer chains. A thinner non-porous top-layer and a thicker porous sublayer were obtained for Kapton® precursor membranes due to the combined effects of NaCl salt as well as the ammonium counter-ions infused PAA polymer chain via aqueous route fabrication. On the other hand, there were no significant morphological changes occurred by the thermal curing process whilst membrane obtained PI structure from PAA precursor, indicating that our newly developed glycerol-based thermal imidization can be readily applied toward preparing extraordinary polymer membranes.

In addition, high thermal stability, which is desirable for water filtration, was observed by cross-sectional SEM image of asymmetric Kapton® PI membrane after storing in water at 80 °C for one hour. The physical stability of the asymmetric Kapton® PI membrane also was observed by SEM after the water filtration experiments (described in Experimental section). As can be seen in figures 6c and 6d, the cross-sectional images revealed that the thermal stability test slightly augmented the number of macrovoids in sublayer whereas water filtration slightly waned the macrovoids in sublayer. Nevertheless, the overall morphological features of asymmetric Kapton® PI membrane found fairly intact after the thermal stability test as well as water filtration experiments, indicating excellent stability of the asymmetric Kapton® PI membrane according to the invention.

Besides, the SEM findings were correlated with the data on the total porosity of the Kapton® PI membrane, obtained by using the average values of the wet and dry masses of porous Kapton® PI membrane. The total porosity of the Kapton® PI membrane was found to 67%, while it consists of thinner non-porous top-layer and thicker porous sublayer. Therefore, the membrane surface porosity also was obtained by the image processing tool (ImageJ) on the SEM images of Kapton® PI membrane (figure 7; "Before heating" concerns pictures from the column A and refers to the poly(amic acid) material before cross-linking; and "after heating" concerns pictures from the column B and refers to the material after heat treatment which has been converted into polyimide). The image processing algorithm for measuring the so-called 'porosity profiles' of top-layer is not included as its SEM image has not been shown any porosity, whereas thicker sublayer exhibited a very high porosity of 81%. Overall, the morphological structure studies exemplify that newly developed aqueous-mediated Kapton® PI membrane is adequate for water filtration applications.

*Water fluxes and permeation properties of Kapton® PI membrane*

The pure water filtration experiments with three replicates together with three cycles were performed for the newly developed porous Kapton® PI membrane. Figure 8 illustrates the pure water flux of the Kapton® PI membrane with three cycles, corresponding to a gradual increase of feed pressures ranging from 0 to 3.5 bars with the intervals of 0.5 bar. In each interval of the cycle, the membrane was merely rinsed with pure water to prevent overestimation on water flux values. Experimental results showed that the permeate flux can reach as maximum as 1316 $L/m^2h$ by means of increasing pressure from 0.5 to 3.5 bars. It is noteworthy that the pure water flux of Kapton® PI at 1 bar (470 $L/m^2h$) was significantly higher than what has been reported for other conventional ultrafiltration membranes (300 $L/m^2h$). Typically, a high flux can be attributed to the enhancement in the surface pore size, total porosity and hydrophilicity of the membrane when other additives such as lithium salts, were used in membrane casting solutions [32]. Interestingly, the newly developed porous asymmetric Kapton® PI membrane showed a similar trend that of porosity and hydrophilicity although SEM images found a thinner non-porous top layer. This is due to the fact that, the water-soluble PAA precursor derived PI membrane has a synergistic effect on physicochemical as well as hydrodynamic permeation behavior, facilitating pure water to pass through the membrane.

On the other hand, a slight decline in water flux was observed as increasing the filtration cycles, particularly at

high feed pressures. For example, the water flux at 3.5 bars was obtained as 1316 $L/m^2h$, 1126 $L/m^2h$ and 1030 $L/m^2h$ for 1st, 2nd and 3rd cycles, respectively. This trend was probably due to the insignificant mechanical deformation or compression of membrane structure under the higher transmembrane pressure during the operation (as explained by cross-sectional SEM images).

A time-dependent pure water filtration showing the mechanical stability of the Kapton® PI membrane was carried out by measuring water flux up to 10 hours (figure 9). A drastic decrease or increase in water flux with increasing time is indicative of defects present in the membrane, and typically defect signals a loss in size and shape discrimination in the polymer matrix. Interestingly, asymmetric Kapton® PI membrane exhibited no such drastic changes up to 10 hr. In fact, only a gradual decrease of overall 19% water flux reduction was found from 0 to 10hr, indicating the high stability of Kapton® PI membrane. The high stability of Kapton® PI membrane was further confirmed by examining the permeation behavior after storing in water at 80 °C for 1 hr (figure 10). The Kapton® PI membrane soaked in 80 °C water displayed the permeance of 422 $L/m^2hbar$, slightly higher than that of pristine Kapton® PI membrane (395 $L/m^2hbar$). This negligible increment in flux rate might be due to the augmentation of macrovoids, as aforementioned in SEM analysis. These results indicated the remarkable capacities at high pressure and thermal operating conditions, making Kapton® PI membrane a strong candidate material for practical applications for water filtration.

*Preparation of polyimide membranes from different precursors*

Table 4.

| **Product name / comprising starting polymer material (compound N°)** | **Molecular Weight (g/mol)** | **Number of amic acid per repeating unit** | **Obtained polymer material / compound N° and Yield** |
|---|---|---|---|
| Kermel® F/D Polyamide - imide | 372 | 1 | > **compound (II)** 90% |
| Kermel® Tech Polyamide - imide | 311 | 1 | > **compound (II)** 85% |
| Matrimid® 5216 - | 585 | 2 | > **compound (V)** 90% |
| Polyetherimid-9 - | 640 | 2 | > **compound (I)** 90% |
| Polyetherimide-18 - | 640 | 2 | > **compound (I)** 90% |
| Al-10(Torlon®) > **compounds (IV) and (VIII)** | - | 0.5 | **>compound (VIII)** - |
| Kapton® (poly(amic acid) > **compound (VII)** | 418 | 2 | > **compound (VI)** 100% |
| - All polyerimide products are commercialized by the society Ultem® ;<br>- Matrimid® 5216 is commercialized by the society Huntsman® ;<br>- Kapton® PAA is commercialized by the society Sigma® ; and<br>- Torlon® product used here is commercialized by the society Solvay®. | | | |

*Conclusion*

This work deals with the fabrication of asymmetric porous polyimide membranes through a complete aqueous-mediated pathway by using ammonium functionalized PAA as a precursor material. We investigated the effects of monovalent salt-induced phase inversion behavior of PAAS precursor material and successfully demonstrated the competency of the resultant membrane to obtain PI structure. This is the first example of monovalent salt-induced phase inversion fabrication to yield porous asymmetric polyimide membranes without the use of any toxic polar organic solvents. The final imidized Kapton® PI membrane showed excellent mechanical and thermal properties together with a porous asymmetric morphology.

Most importantly, Kapton® PI membrane displayed a very high water flux while maintaining a good physical stability at elevated operating conditions.

**REFERENCES**

[1] B. Van der Bruggen, C. Vandecasteele, T. Van Gestel, W. Doyen, R. Leysen, A review of pressure-driven membrane processes in wastewater treatment and drinking water production, Environmental Progress & Sustainable Energy, 22 (2003) 46-56.

[2] M.M. Pendergast, E.M. Hoek, A review of water treatment membrane nanotechnologies, Energy & Environmental Science, 4 (2011) 1946-1971.

[3] A. Lee, J.W. Elam, S.B. Darling, Membrane materials for water purification: design, development, and application, Environmental Science: Water Research & Technology, 2 (2016) 17-42.

[4] G.M. Geise, H.S. Lee, D.J. Miller, B.D. Freeman, J.E. McGrath, D.R. Paul, Water purification by membranes: the role of polymer science, Journal of Polymer Science Part B: Polymer Physics, 48 (2010) 1685-1718.

[5] M. Padaki, R.S. Murali, M.S. Abdullah, N. Misdan, A. Moslehyani, M. Kassim, N. Hilal, A. Ismail, Membrane technology enhancement in oil-water separation. A review, Desalination, 357 (2015) 197-207.

[6] M. Sillanpää, M.C. Ncibi, A. Matilainen, M. Vepsäläinen, Removal of natural organic matter in drinking water treatment by coagulation: A comprehensive review, Chemosphere, 190 (2018) 54-71.

[7] J.-Q. Jiang, The role of coagulation in water treatment, Current Opinion in Chemical Engineering, 8 (2015) 36-44.

[8] C.S. Lee, J. Robinson, M.F. Chong, A review on application of flocculants in wastewater treatment, Process Safety and Environmental Protection, 92 (2014) 489-508.

[9] R. Yang, H. Li, M. Huang, H. Yang, A. Li, A review on chitosan-based flocculants and their applications in water treatment, Water research, 95 (2016) 59-89.

[10] C.L. Grady Jr, G.T. Daigger, N.G. Love, C.D. Filipe, Biological wastewater treatment, CRC press, 2011.

[11] L. Ma, W.-x. Zhang, Enhanced biological treatment of industrial wastewater with bimetallic zero-valent iron, in, ACS Publications, 2008.

[12] G.M. Geise, H.B. Park, A.C. Sagle, B.D. Freeman, J.E. McGrath, Water permeability and water/salt selectivity tradeoff in polymers for desalination, Journal of Membrane Science, 369 (2011) 130-138.

[13] H.B. Park, J. Kamcev, L.M. Robeson, M. Elimelech, B.D. Freeman, Maximizing the right stuff: The trade-off between membrane permeability and selectivity, Science, 356 (2017) eaab0530.

[14] L.M. Robeson, The upper bound revisited, Journal of Membrane Science, 320 (2008) 390-400.

[15] G.R. Guillen, Y. Pan, M. Li, E.M. Hoek, Preparation and characterization of membranes formed by nonsolvent induced phase separation: a review, Industrial & Engineering Chemistry Research, 50 (2011) 3798-3817.

[16] H. Matsuyama, M. Yuasa, Y. Kitamura, M. Teramoto, D.R. Lloyd, Structure control of anisotropic and asymmetric polypropylene membrane prepared by thermally induced phase separation, Journal of Membrane Science, 179 (2000) 91-100.

[18] Y. Ding, B. Bikson, J.K. Nelson, Polyimide membranes derived from poly (amic acid) salt precursor polymers. 1. Synthesis and characterization, Macromolecules, 35 (2002) 905-911.

[19] C. Wang, Q. Wang, T. Wang, Simple method for preparation of porous polyimide film with an ordered surface based on in situ self-assembly of polyamic acid and silica microspheres, Langmuir, 26 (2010) 18357-18361.

[20] M. Kim, G. Kim, J. Kim, D. Lee, S. Lee, J. Kwon, H. Han, New continuous process developed for synthesizing sponge-type polyimide membrane and its pore size control method via non-solvent induced phase separation (NIPS), Microporous and Mesoporous Materials, 242 (2017) 166-172.

[21] O. M'barki, A. Hanafia, D. Bouyer, C. Faur, R. Sescousse, U. Delabre, C. Blot, P. Guenoun, A. Deratani, D. Quemener, Greener method to prepare porous polymer membranes by combining thermally induced phase separation and crosslinking of poly (vinyl alcohol) in water, Journal of Membrane Science, 458 (2014) 225-235.

[22] A. Hanafia, C. Faur, A. Deratani, P. Guenoun, H. Garate, D. Quemener, C. Pochat-Bohatier, D. Bouyer, Fabrication of novel porous membrane from biobased water-soluble polymer (hydroxypropylcellulose), Journal of Membrane Science, 526 (2017) 212-220.

[23] J. Facinelli, S. Gardner, L. Dong, C. Sensenich, R. Davis, J. Riffle, Controlled molecular weight polyimides from poly (amic acid) salt precursors, Macromolecules, 29 (1996) 7342-7350.

**[24]** Y. Ding, B. Bikson, J.K. Nelson, Polyimide membranes derived from poly (amic acid) salt precursor polymers. 1. Synthesis and characterization, Macromolecules, 35 (2002) 905-911.

**[25]** Xiaolong Lu et al., Inc. J Appl Polym Sci, 2009, vol.114, iss.2, 1213-1219

**[26]** AlMarzooqi, F.A., Bilad, M.R., Mansoor, B. et al. A comparative study of image analysis and porometry techniques for characterization of porous membranes. J Mater Sci 51, 2017-2032 (2016).

## Claims

1. Process for the preparation of a porous polyimide membrane comprising the following steps:

   i- from a starting polymer material comprising at least one of the following polyamic acid, PAA, selected among an electronically neutral polyamic acid, enPAA, and a negatively charged polyamic acid, NPAA, comprising cations to maintain electroneutrality, carrying out an acid-base reaction in water to obtain a highly negatively charged polyamic acid, HNPAA, comprising cations to maintain electroneutrality having a molar ratio of [total amounts of cationic charges] / [total amount of carboxylic functions of the PAA] from 0.90 to 1 ;
   ii- performing a reaction involving a phase inversion technique ; and
   iii- carrying out an imidization reaction on the HNPAA to obtain the porous polyimide membrane.

2. Process according to claim 1, wherein the acid-base reaction performed in step i- consists of creating carboxylate functions on the polymeric starting material, preferably involving an amine, more preferably the amine is a trialkylamine, and most preferably the amine is the triethylamine.

3. Process according to claim 1 or 2, wherein step i- of the process comprises the following sub-steps:

   i-a) solubilizing the highly negatively charged polyamic acid, HNPAA, in water according to the mass ratio HNPAA / water of 10 to 30 : 90 to 70 ; and
   i-b) adding an aqueous saline solution, preferably containing an alkaline salt, and more preferably the aqueous saline solution is a 0.5 to 1.5 M of a NaCl solution ; to obtain a homogeneous solution of HNPAA.

4. Process according to claim 3, wherein in step i- after performing the sub-step i-b), an additional sub-step i-c) consisting in casting the homogeneous solution of HNPAA on a flat support is performed.

5. Process according to anyone of claims 1 to 4, wherein in step ii) the phase inversion technique is realized by immersing the HNPAA in a coagulation bath to obtain a solid material with porosity.

6. Process according to claim 5, wherein the coagulation bath contains at least a polyvalent cation, preferably a divalent cation, more preferably calcium.

7. Process according to anyone of claims 1 to 6, wherein the enPAA or the NPAA is an aromatic enPAA or an aromatic NPAA.

8. Process according to anyone of the preceding claims, for the preparation of a porous polyimide membrane comprising the following steps :

   a)- immersing a polyamic acid PAA, or a PAA salt, in water and adding an amount of tertiary amine in order to reach the equimolar ratio between the carboxylic acid function and tertiary amine function ;
   b)- applying a vigorous stirring to the mixture obtained at step a) until complete dissolution to obtain a homogeneous solution ;
   c)- filtering and freeze-drying the solution obtained in b) to obtain a PAA salt;
   d)- dissolving the PAA salt obtained in c) in water and heating, preferably under stirring above 40°C during at least half an hour;
   e)- adding a 1M solution of NaCl and stirring above 60°C until the obtention of an homogeneous material;
   f)- sonicating the material obtained in step e) and spreading the material on a substrate ;
   g)- immersing the substrate with the material in a 1M solution of $CaCl_2$ in order to obtain a membrane on the substrate ;
   h)- washing the membrane with a water and/or a water/glycerol solution;
   i)- immersing the membrane in a glycerol solution and leave it at 90 to 150°C, preferably for at least 1 h ; and
   j)- vacuum drying the membrane at 90 to 150°C for more than 1 h, and at room temperature during one night.

9. Porous polyimide membrane, wherein the total porosity of the membrane is greater than 50 % measured by a dry-wet method and with the equation:

   where 'ε' is the porosity of membrane, $W_w$ is the weight of wet membrane (g), $W_d$ is the weight of dry membrane (g), and $\rho_w$ is pure water density (0.998 g/cm$^3$) at room temperature ; A and $\delta$ are the area and thickness of the

membrane in wet state ; and
one of the membrane surfaces exhibits a porosity greater than 80% preferably greater than 90%, the surface porosity being calculated by computer image analysis (ImageJ) from SEM images.

**10.** Porous polyimide membrane according to claim 9, wherein the membrane shows an asymmetric morphology.

**11.** Porous polyimide membrane according to anyone of claims 9 to 10, wherein the porous polyimide membrane comprises a polyimide material and is prepared according to the process of any of claims 1 to 8.

**12.** Porous polyimide membrane according to claim 11, wherein the polyimide material of the membrane is selected among at least a polyetherimide, a polyamide-imide, an imide with polycyclic and ketone groups, and is preferably selected among one of the following polyimide polymers:

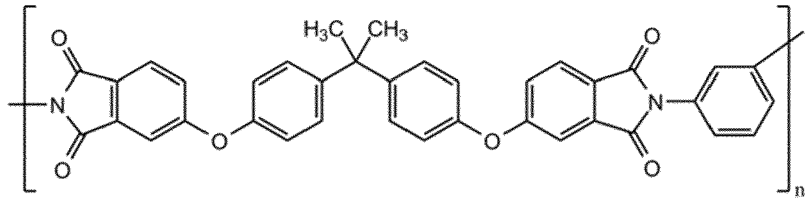

**(I)**

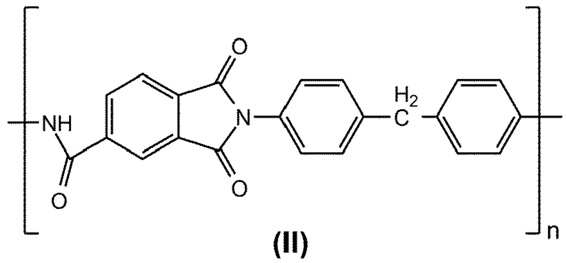

**(II)**

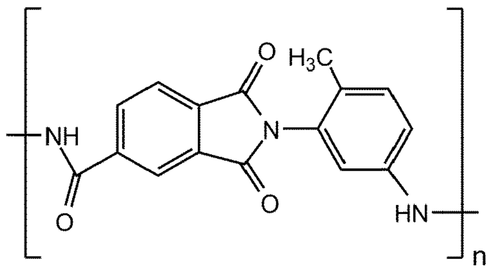

**(III)**

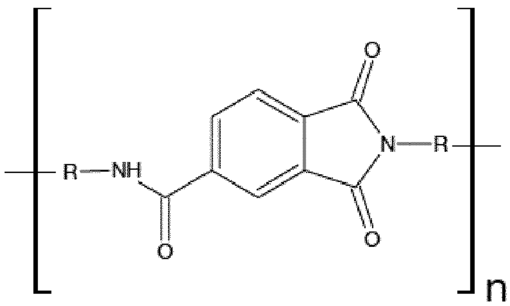

**(IV)**

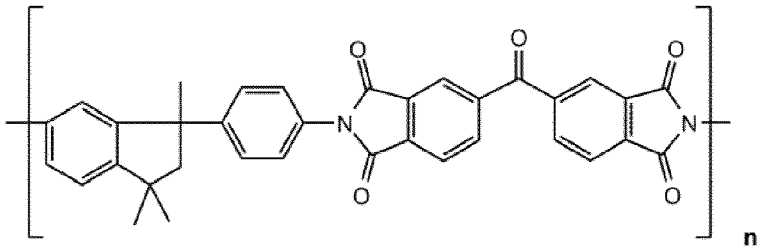

**(V)**

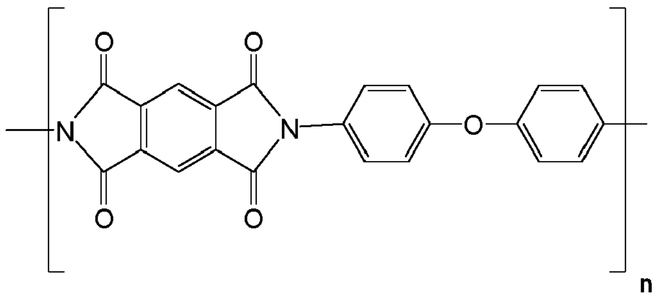

**(VI) ;**

the index n being selected between 20 and 300;
the R- groups of compound (IV) being selected from aliphatic carbon chains and carbon chains comprising at least one aromatic group.

**13.** Porous polyimide membrane according to claim 12, wherein the enPAA, or the NPAA, used as starting polymer material in the process is selected in the group comprising at least one of the followings, or one of its salt:

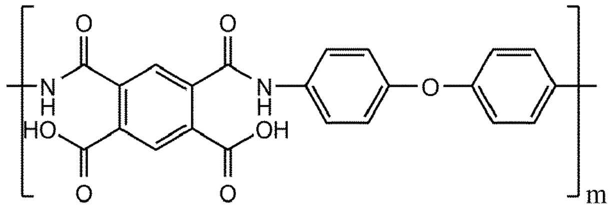

**(VII)**

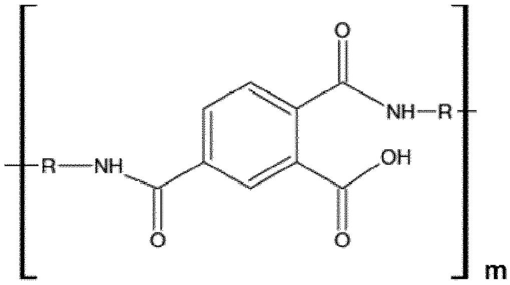

(VIII) ;

the index m being selected between 20 and 300;
and preferably the starting material is (VII).

**14.** Use of a porous polyimide membrane according to anyone of claims 9 to 13, for wastewater filtrations.

**15.** Use according to claim 14, for the treatment of waste comprising a water/oil mixture.

FIG. 1

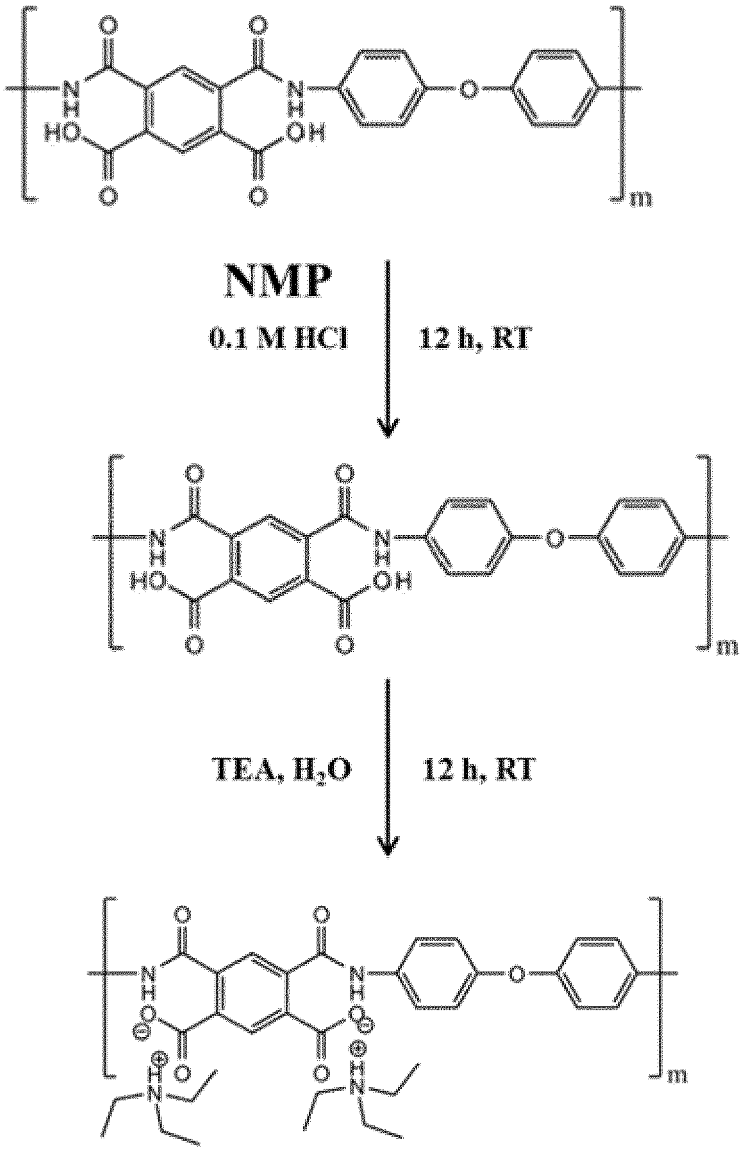


**Kapton® PAA**

**(VII)**

**Kapton® PAAS** **(IX)**

FIG. 2

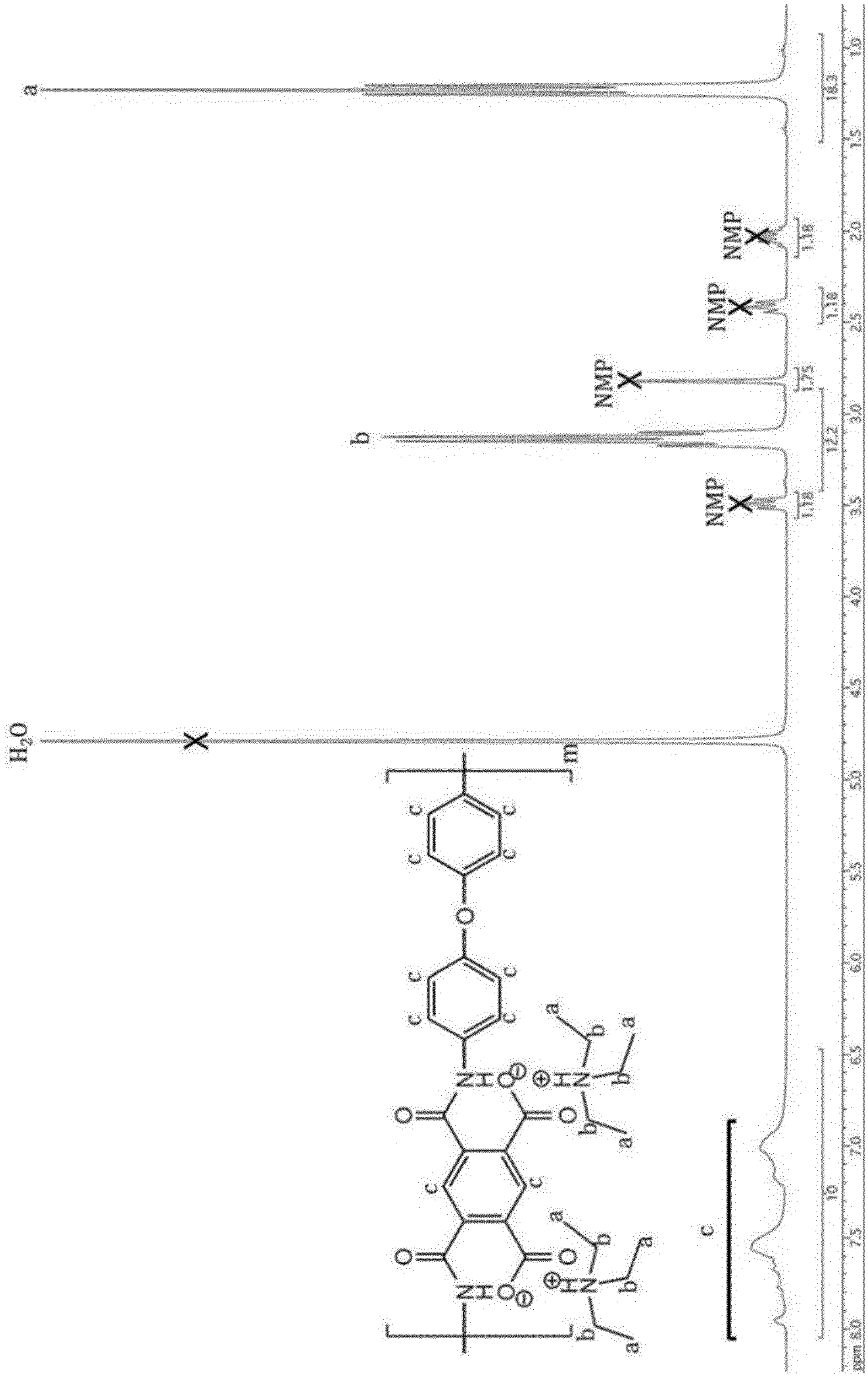

FIG. 3

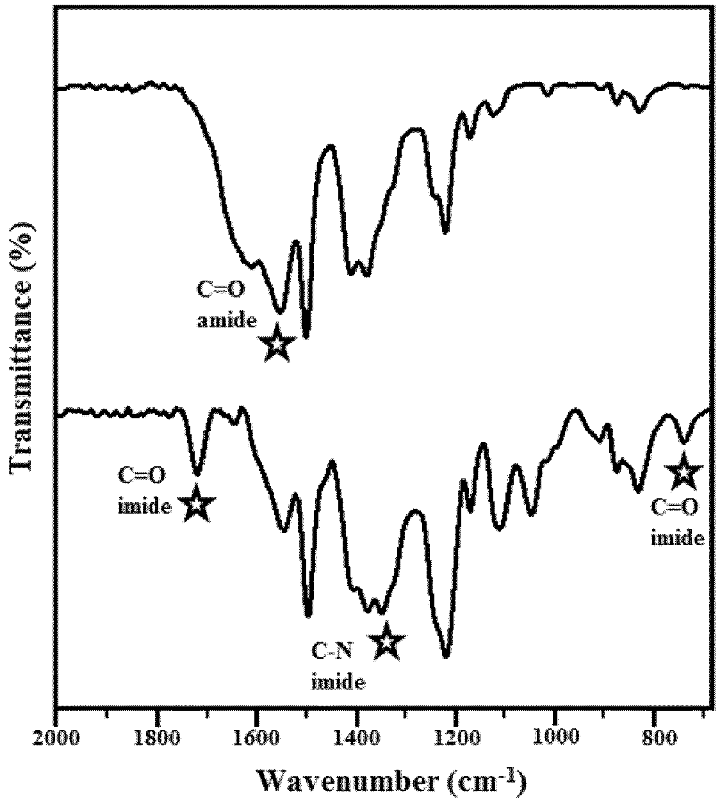
Transmittance (%)
C=O
amide
C=O
imide
C-N
imide
C=O
imide
2000
1800
1600
1400
1200
1000
800
Wavenumber (cm-1)

FIG. 4

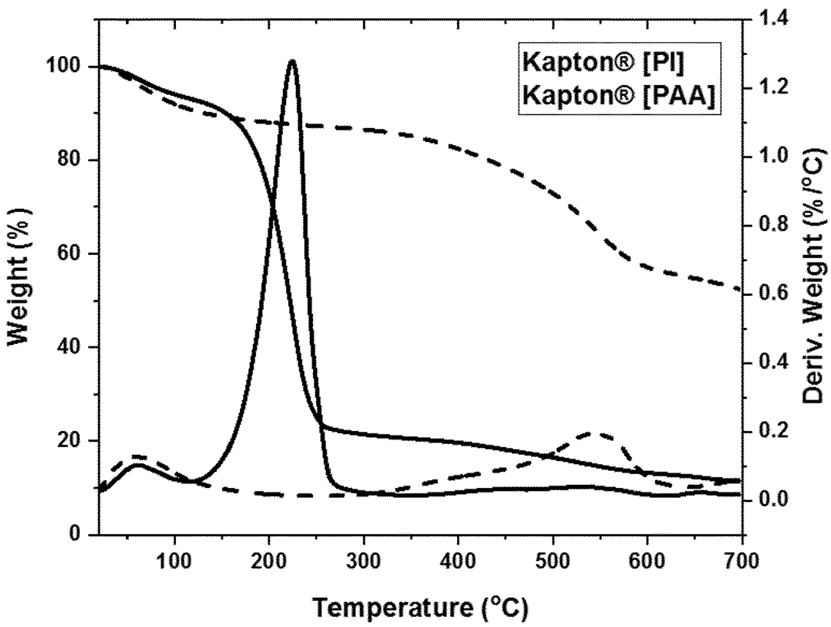
Kapton® [PI]
Kapton® [PAA]
Weight (%)
Deriv. Weight (%/°C)
Temperature (°C)
0
20
40
60
80
100
0.0
0.2
0.4
0.6
0.8
1.0
1.2
1.4
100
200
300
400
500
600
700

FIG. 5

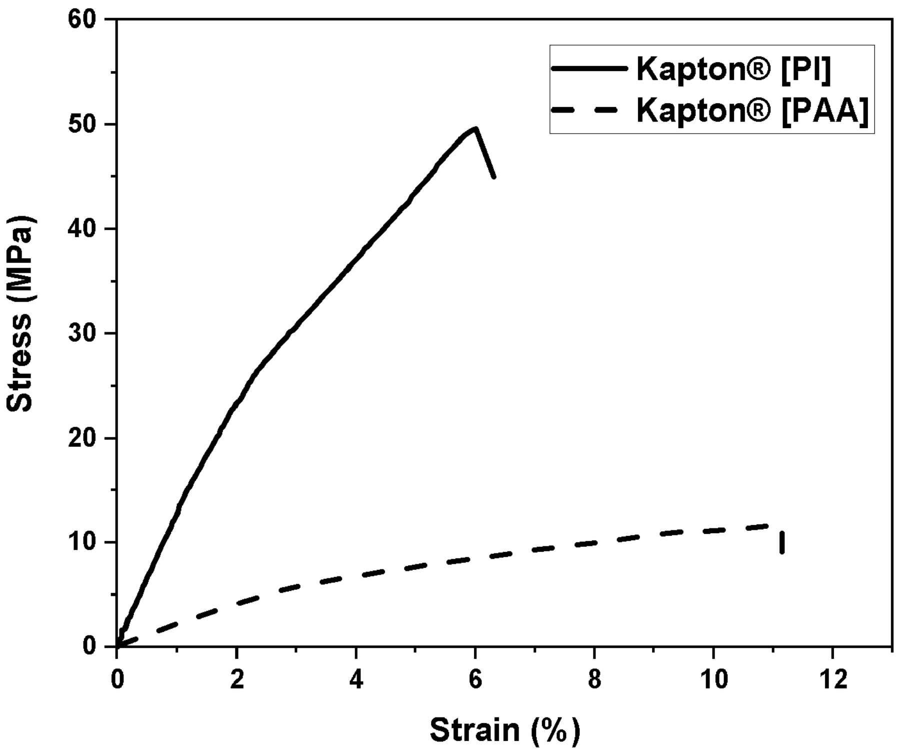
Kapton® [PI]
Kapton® [PAA]
Stress (MPa)
Strain (%)
0
10
20
30
40
50
60
0
2
4
6
8
10
12

FIG. 6a

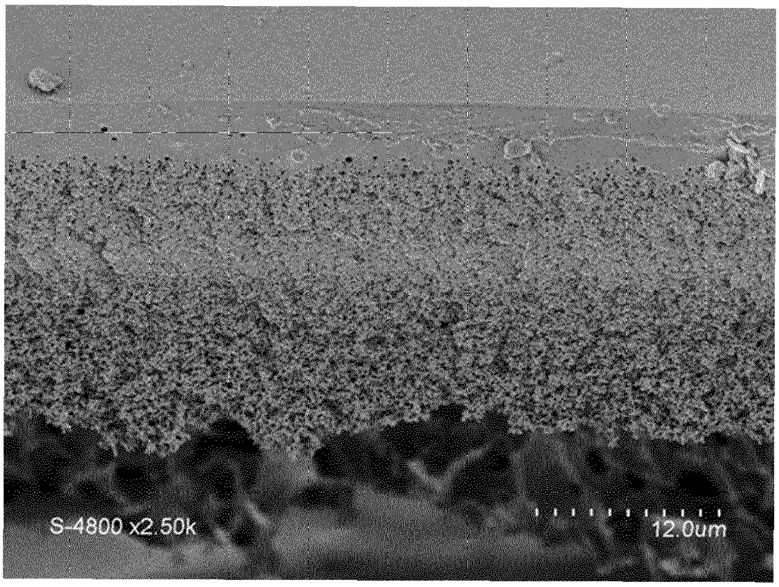


FIG. 6b

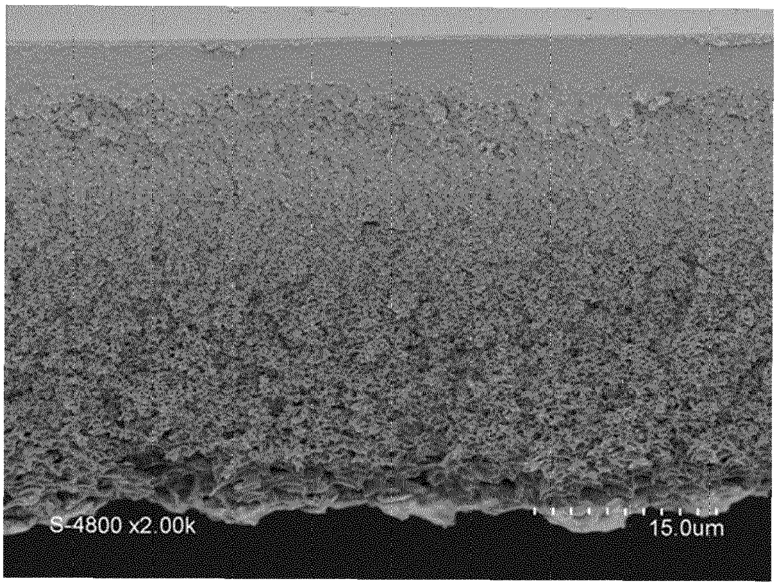

FIG. 6c

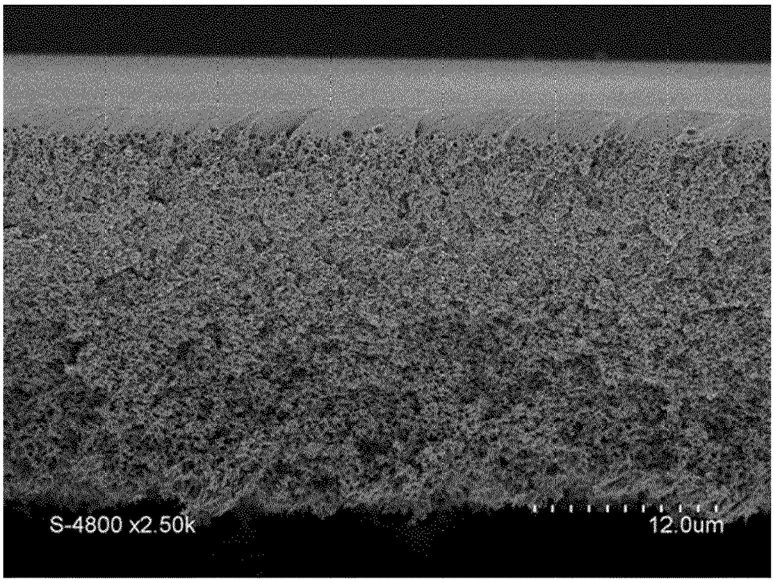


FIG. 6d

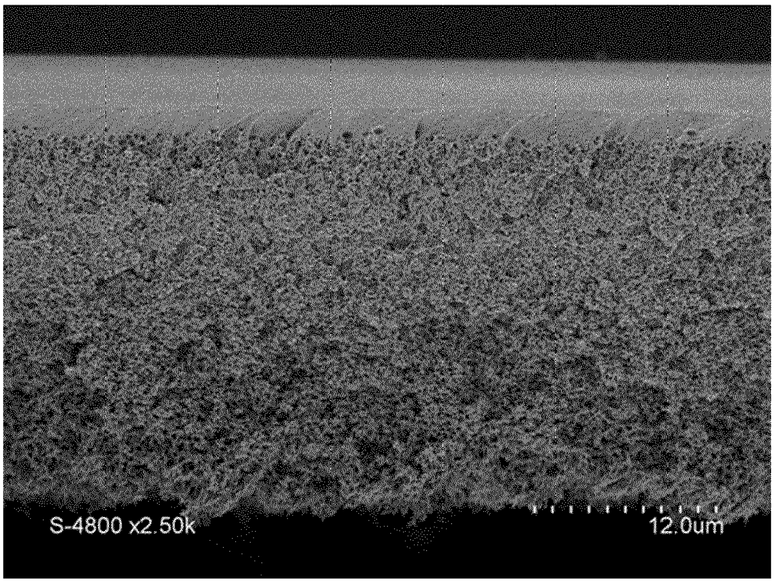

FIG. 7

A B

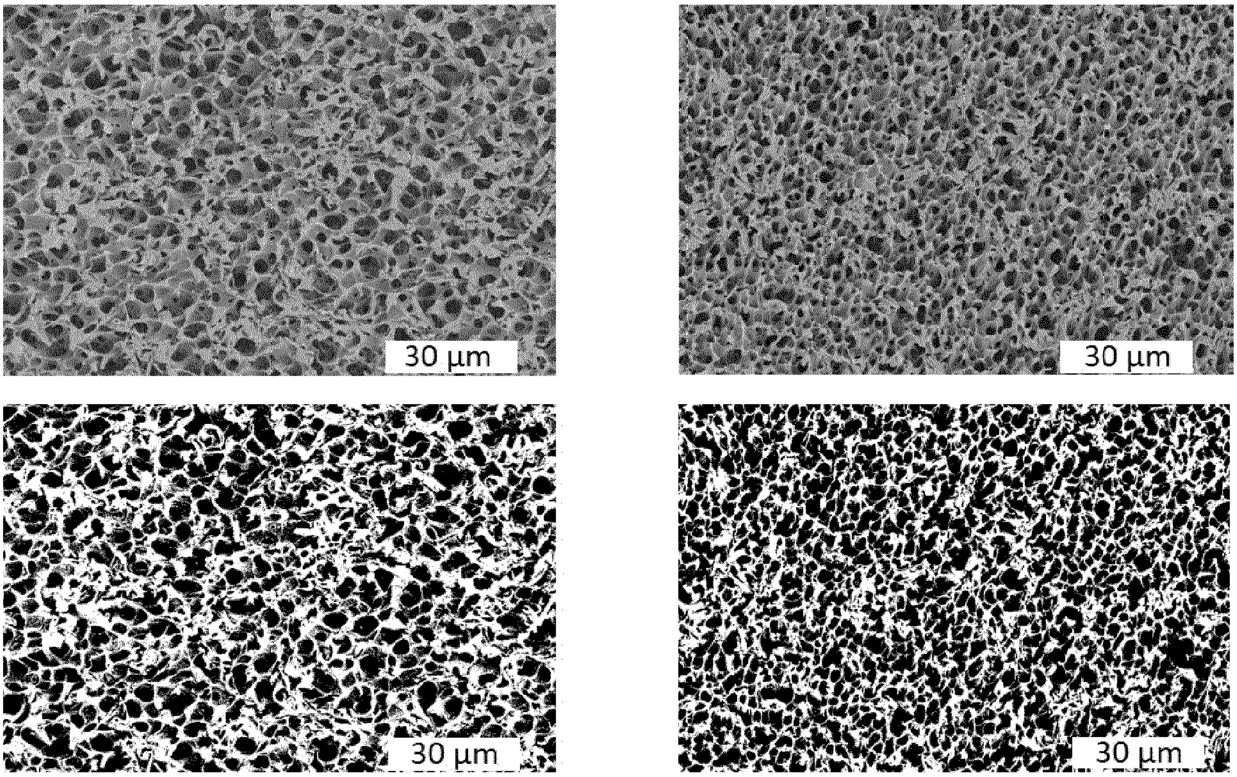


| Before Heating | | | After Heating | |
|---|---|---|---|---|
| 30um | | | 30um | |
| Area | 11966,759 | | Area | 11853,206 |
| Total Area | 2381,656 | | Total Area | 2130,65 |
| Porosity | 0,80097736 | | Porosity | 0,82024694 |
| P% | 80,0977357 | | P% | 82,0246944 |

FIG. 8

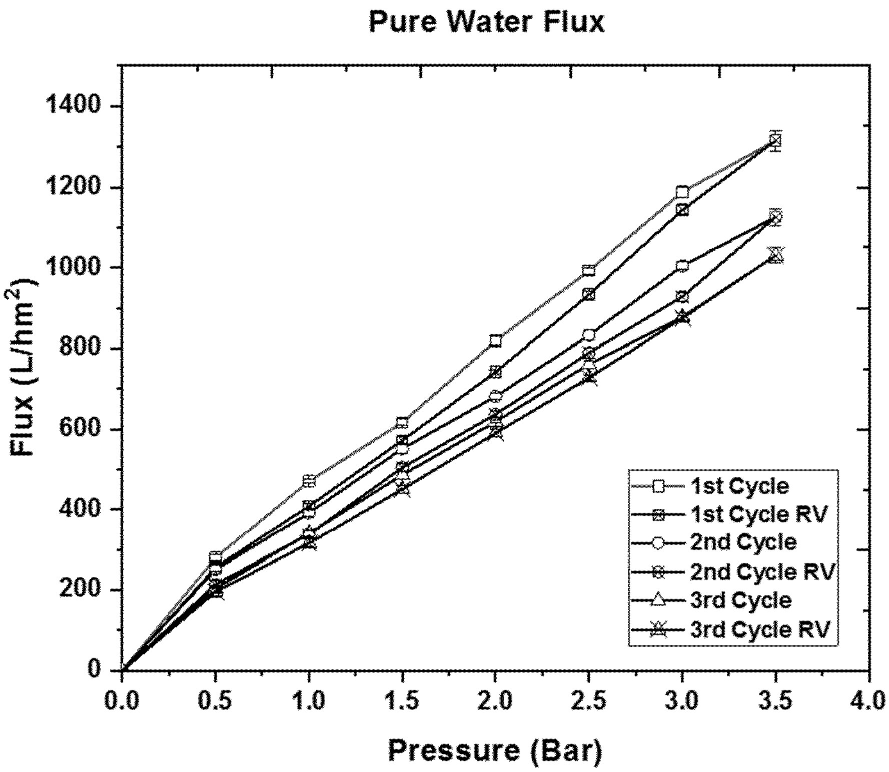
Pure Water Flux
Flux (L/hm$^2$)
Pressure (Bar)
0
200
400
600
800
1000
1200
1400
0.0
0.5
1.0
1.5
2.0
2.5
3.0
3.5
4.0
1st Cycle
1st Cycle RV
2nd Cycle
2nd Cycle RV
3rd Cycle
3rd Cycle RV

FIG. 9

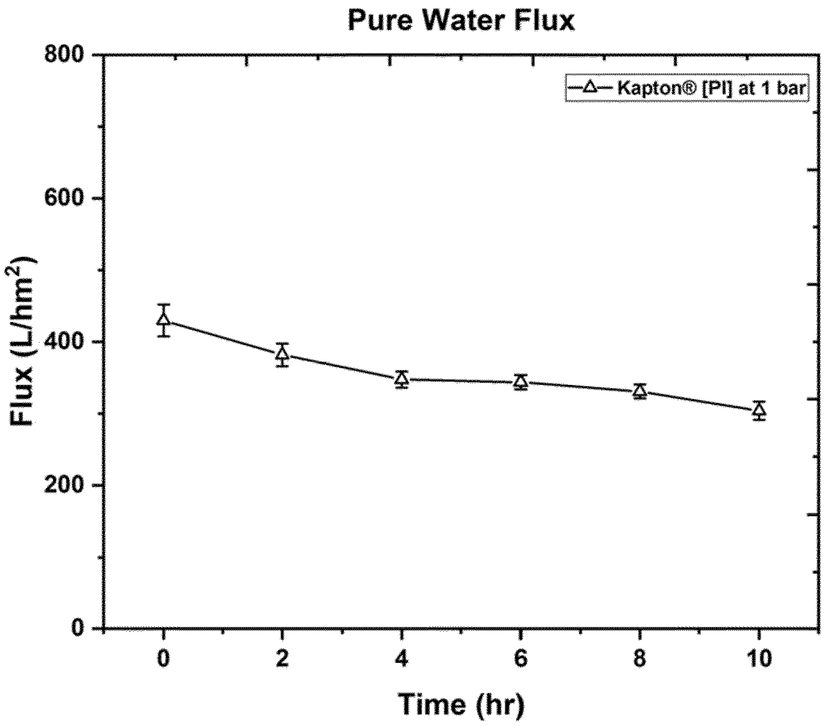
Pure Water Flux
Kapton® [PI] at 1 bar
Flux (L/hm$^2$)
800
600
400
200
0
0
2
4
6
8
10
Time (hr)

FIG. 10

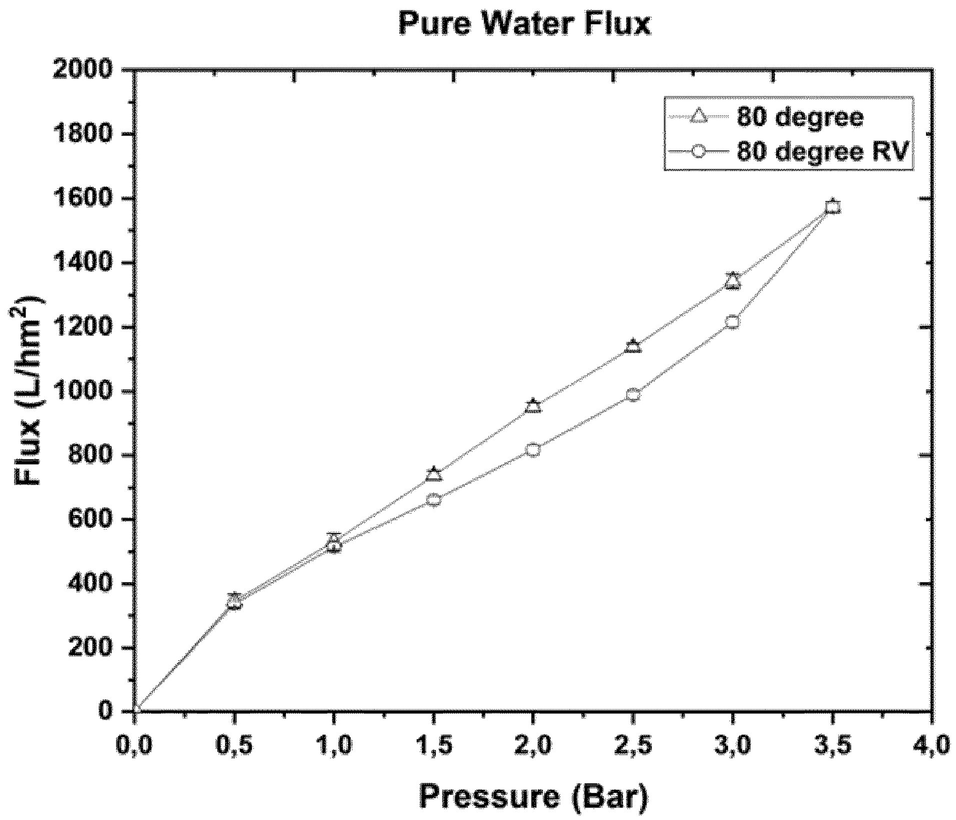
Pure Water Flux
80 degree
80 degree RV
Flux (L/hm$^2$)
2000
1800
1600
1400
1200
1000
800
600
400
200
0
0,0
0,5
1,0
1,5
2,0
2,5
3,0
3,5
4,0
Pressure (Bar)

Europäisches Patentamt
European Patent Office
Office européen des brevets

# EUROPEAN SEARCH REPORT

Application Number
EP 22 30 6757

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SVETLICHNYI V. M. ET AL: "Synthesis of Water-Soluble Salts of Poly(amic acids) and Structural Features of Fibers and Films Obtained on Their Basis", POLYMER SCIENCE. SERIES B, vol. 62, no. 2, 1 March 2020 (2020-03-01), pages 73-84, XP093046141, New York ISSN: 1560-0904, DOI: 10.1134/S1560090420020062 Retrieved from the Internet: URL:https://link.springer.com/content/pdf/10.1134/S1560090420020062.pdf?pdf=button> * the whole document * ----- | 1-15 | INV. B01D61/14 B01D67/00 B01D71/64 |
| X | LIN RIJIA ET AL: "Mixed Matrix Membranes with Strengthened MOFs/Polymer Interfacial Interaction and Improved Membrane Performance", APPLIED MATERIALS & INTERFACES, vol. 6, no. 8, 23 April 2014 (2014-04-23), pages 5609-5618, XP093046235, US ISSN: 1944-8244, DOI: 10.1021/am500081e * the whole document * ----- | 1-15 | TECHNICAL FIELDS SEARCHED (IPC) B01D |
| X | DONGDAN CAI ET AL: "Synthesis, characterization and hydrolytic stability of poly (amic acid) ammonium salt", POLYMER DEGRADATION AND STABILITY, BARKING, GB, vol. 96, no. 12, 17 September 2011 (2011-09-17), pages 2174-2180, XP028104255, ISSN: 0141-3910, DOI: 10.1016/J.POLYMDEGRADSTAB.2011.09.008 [retrieved on 2011-09-22] * the whole document * ----- -/-- | 1-15 | |

The present search report has been drawn up for all claims

1

| Place of search | Date of completion of the search | Examiner |
|---|---|---|
| Munich | 12 May 2023 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 30 6757

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 086 737 A2 (PRAXAIR TECHNOLOGY INC [US]) 28 March 2001 (2001-03-28)<br>* paragraph [0006] - paragraph [0017] *<br>----- | 14,15<br>1-13 | |
| X,D<br>A | KIM MYEONGSOO ET AL: "New continuous process developed for synthesizing sponge-type polyimide membrane and its pore size control method via non-solvent induced phase separation (NIPS)", MICROPOROUS AND MESOPOROUS MATERIALS, vol. 242, 12 January 2017 (2017-01-12), pages 166-172, XP029941921, ISSN: 1387-1811, DOI: 10.1016/J.MICROMESO.2017.01.013<br>* the whole document *<br>----- | 14,15<br>1-13 | |
| A | BA C ET AL: "Preparation of PMDA/ODA polyimide membrane for use as substrate in a thermally stable composite reverse osmosis membrane", JOURNAL OF MEMBRANE SCIENCE, ELSEVIER BV, NL, vol. 363, no. 1-2, 1 November 2010 (2010-11-01), pages 140-148, XP027261209, ISSN: 0376-7388 [retrieved on 2010-09-02]<br>* the whole document *<br>----- | 14,15 | TECHNICAL FIELDS SEARCHED (IPC) |

The present search report has been drawn up for all claims

1

| Place of search | Date of completion of the search | Examiner |
|---|---|---|
| Munich | 12 May 2023 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 30 6757

This annex lists the patent family members relating to the patent documents cited in the above-mentioned European search report. The members are as contained in the European Patent Office EDP file on
The European Patent Office is in no way liable for these particulars which are merely given for the purpose of information.

12-05-2023

| Patent document cited in search report | Publication date | Patent family member(s) | Publication date |
|---|---|---|---|
| EP 1086737 A2 | 28-03-2001 | BR 0007388 A | 02-01-2002 |
| | | BR 0007389 A | 08-01-2002 |
| | | BR 0007390 A | 02-01-2002 |
| | | CN 1293080 A | 02-05-2001 |
| | | DE 60031752 T2 | 20-09-2007 |
| | | EP 1086737 A2 | 28-03-2001 |
| | | US 6497747 B1 | 24-12-2002 |
| | | US 6790263 B1 | 14-09-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **B. VAN DER BRUGGEN ; C. VANDECASTEELE ; T. VAN GESTEL ; W. DOYEN ; R. LEYSEN.** A review of pressure-driven membrane processes in wastewater treatment and drinking water production. *Environmental Progress & Sustainable Energy,* 2003, vol. 22, 46-56
- **M.M. PENDERGAST ; E.M. HOEK.** A review of water treatment membrane nanotechnologies. *Energy & Environmental Science,* 2011, vol. 4, 1946-1971
- **A. LEE ; J.W. ELAM ; S.B. DARLING.** Membrane materials for water purification: design, development, and application. *Environmental Science: Water Research & Technology,* 2016, vol. 2, 17-42
- **G.M. GEISE ; H.S. LEE ; D.J. MILLER ; B.D. FREEMAN ; J.E. MCGRATH ; D.R. PAUL.** Water purification by membranes: the role of polymer science. *Journal of Polymer Science Part B: Polymer Physics,* 2010, vol. 48, 1685-1718
- **M. PADAKI ; R.S. MURALI ; M.S. ABDULLAH ; N. MISDAN ; A. MOSLEHYANI ; M. KASSIM ; N. HILAL ; A. ISMAIL.** Membrane technology enhancement in oil-water separation. A review. *Desalination,* 2015, vol. 357, 197-207
- **M. SILLANPÄÄ ; M.C. NCIBI ; A. MATILAINEN ; M. VEPSÄLÄINEN.** Removal of natural organic matter in drinking water treatment by coagulation: A comprehensive review. *Chemosphere,* 2018, vol. 190, 54-71
- **J.-Q. JIANG.** The role of coagulation in water treatment. *Current Opinion in Chemical Engineering,* 2015, vol. 8, 36-44
- **C.S. LEE ; J. ROBINSON ; M.F. CHONG.** A review on application of flocculants in wastewater treatment. *Process Safety and Environmental Protection,* 2014, vol. 92, 489-508
- **R. YANG ; H. LI ; M. HUANG ; H. YANG ; A. LI.** A review on chitosan-based flocculants and their applications in water treatment. *Water research,* 2016, vol. 95, 59-89
- **C.L. GRADY JR ; G.T. DAIGGER ; N.G. LOVE ; C.D. FILIPE.** Biological wastewater treatment. *CRC press,* 2011
- **L. MA ; W.-X. ZHANG.** Enhanced biological treatment of industrial wastewater with bimetallic zero-valent iron. *ACS Publications,* 2008
- **G.M. GEISE ; H.B. PARK ; A.C. SAGLE ; B.D. FREEMAN ; J.E. MCGRATH.** Water permeability and water/salt selectivity tradeoff in polymers for desalination. *Journal of Membrane Science,* 2011, vol. 369, 130-138
- **H.B. PARK ; J. KAMCEV ; L.M. ROBESON ; M. ELIMELECH ; B.D. FREEMAN.** Maximizing the right stuff: The trade-off between membrane permeability and selectivity. *Science,* 2017, vol. 356, eaab0530
- **L.M. ROBESON.** The upper bound revisited. *Journal of Membrane Science,* 2008, vol. 320, 390-400
- **G.R. GUILLEN ; Y. PAN ; M. LI ; E.M. HOEK.** Preparation and characterization of membranes formed by nonsolvent induced phase separation: a review. *Industrial & Engineering Chemistry Research,* 2011, vol. 50, 3798-3817
- **H. MATSUYAMA ; M. YUASA ; Y. KITAMURA ; M. TERAMOTO ; D.R. LLOYD.** Structure control of anisotropic and asymmetric polypropylene membrane prepared by thermally induced phase separation. *Journal of Membrane Science,* 2000, vol. 179, 91-100
- **Y. DING ; B. BIKSON ; J.K. NELSON.** Polyimide membranes derived from poly (amic acid) salt precursor polymers. 1. Synthesis and characterization. *Macromolecules,* 2002, vol. 35, 905-911
- **C. WANG ; Q. WANG ; T. WANG.** Simple method for preparation of porous polyimide film with an ordered surface based on in situ self-assembly of polyamic acid and silica microspheres. *Langmuir,* 2010, vol. 26, 18357-18361
- **M. KIM ; G. KIM ; J. KIM ; D. LEE ; S. LEE ; J. KWON ; H. HAN.** New continuous process developed for synthesizing sponge-type polyimide membrane and its pore size control method via non-solvent induced phase separation (NIPS). *Microporous and Mesoporous Materials,* 2017, vol. 242, 166-172
- **O. M'BARKI ; A. HANAFIA ; D. BOUYER ; C. FAUR ; R. SESCOUSSE ; U. DELABRE ; C. BLOT ; P. GUENOUN ; A. DERATANI ; D. QUEMENER.** Greener method to prepare porous polymer membranes by combining thermally induced phase separation and crosslinking of poly (vinyl alcohol) in water. *Journal of Membrane Science,* 2014, vol. 458, 225-235

- **A. HANAFIA ; C. FAUR ; A. DERATANI ; P. GUENOUN ; H. GARATE ; D. QUEMENER ; C. POCHAT-BOHATIER ; D. BOUYER.** Fabrication of novel porous membrane from biobased water-soluble polymer (hydroxypropylcellulose). *Journal of Membrane Science,* 2017, vol. 526, 212-220
- **J. FACINELLI ; S. GARDNER ; L. DONG ; C. SENSENICH ; R. DAVIS ; J. RIFFLE.** Controlled molecular weight polyimides from poly (amic acid) salt precursors. *Macromolecules,* 1996, vol. 29, 7342-7350
- **XIAOLONG LU et al.** *Inc. J Appl Polym Sci,* 2009, vol. 114 (2), 1213-1219
- **ALMARZOOQI, F.A. ; BILAD, M.R. ; MANSOOR, B. et al.** A comparative study of image analysis and porometry techniques for characterization of porous membranes. *J Mater Sci,* 2016, vol. 51, 2017-2032